# EUROPÄISCHE PATENTANMELDUNG

(11) **EP 4 427 646 A1**
(43) Veröffentlichungstag der Anmeldung: **11.09.2024**
(21) Anmeldenummer: 24160421.4
(22) Anmeldetag: 29.02.2024
(51) Int. Cl.: A47J 37/07

(54) **GRILL**

(30) Priorität: 07.03.2023 CH 2422023
(71) Anmelder: Outdoorchef AG, 8050 Zürich (CH)
(72) Erfinder: Pfeifer, Stephan, 5322 Koblenz (CH); Bittel, André, 5644 Auw (CH); Schob, Manuel, 8050 Zürich (CH)
(74) Vertreter: Wenzel Nemetzade Warthmüller Patentanwälte Part mbB

(57) **Zusammenfassung**

Die Erfindung betrifft einen Grill nach dem Oberbegriff des Patentanspruchs 1 zum Grillen, Garen oder Backen von Speisen auf einer Grillfläche. Er weist eine Brennkammer (2) auf, in der mindestens ein Brenner (3) vorgesehen ist, wobei die Grillfläche oberhalb des Brenners (3) anordenbar ist. Erreichbar sein soll ein kurzzeitiges anbraten mit hoher Temperatur und ohne Fettbrand. Hierzu ist auf der, vom Brenner (3) abgewandten offenen Fläche der Brennkammer (2) eine hoch wärmebeständige Platte lagestabil anordenbar. Das Temperaturfeld ist sehr variabel, man kann normal grillen oder auch mit sehr hohen Temperaturen arbeiten, ohne Fettbrand befürchten zu müssen.

## Beschreibung

Die Erfindung betrifft einen Grill nach dem Oberbegriff des Patentanspruchs 1 zum Grillen, Garen oder Backen von Speisen auf einer Grillfläche, insbesondere zur Verwendung im Freien. Erweist eine Brennkammer auf, in der mindestens ein Brenner angeordnet ist, wobei oberhalb des Brenners ein Grillrost anordenbar ist. Der Brennkammer kann eine klappbare Haube zugeordnet sein, die im geschlossenen Zustand Brenner und Grillrost abdeckt.

Grills und Gasgrills zum Garen von Grillgut resp. Speisen weisen zumindest einen Grillkörper mit einem Grillrost oder dergleichen zur Auflage des Grilliergutes sowie darunter befindlichen Mitteln zur Wärmeerzeugung, insbesondere glühende Holzkohle, Pellets, Heizelemente oder Gasbrenner auf. Je nach Ausstattung der Grillgeräte ist weiterhin ein Deckel oder eine Haube zum Verschluss des Grillkörpers vorgesehen. Bei einfachen Grills ist der Deckel vom Grillkörper getrennt und lose aufsetzbar. Bei vielen Grills ist der Deckel als Klappdeckel jedoch fest mit dem Grillkörper verbunden.

Aus der EP 0653917 B1 ist ein Grill zur Verwendung im Freien bekannt, bei dem zwischen einer Wärmequelle, insbesondere ein Gasbrennerring im unteren Bereich eines Grillbehälters und einem Rost zur Auflage des Grilliergutes eine Wandung eingesetzt ist, die Tropfen vom Grilliergut, insbesondere Fett oder Wasser auf die Wärmequelle verhindert und solche Tropfen oberhalb der Wärmequelle sammelnd auffängt. Die Tropfen werden in einen, unterhalb der Wärmequelle angeordneten Behälter geleitet. Hierbei sind diejenigen Bereiche der Wandung, die aufgrund ihrer Temperatur ein Verdampfen von Tropfen bewirken, in einem Winkel von 30° bis 70° zur Horizontalen geneigt angeordnet. Die Wandung ist in Form von Kugelschalenabschnitten gebildet. Sie beinhaltet Leitmittel, die die Tropfen in einen zentralen Aussparungsbereich der Wärmequelle und von da in einen unterhalb der Wärmequelle angeordneten Behälter leiten.

Bei einem Gasgrillgerät gemäss DE 202012100587 U ist unterhalb einer Brennereinheit eine Fettauffangeinrichtung angeordnet, die mehrere, nebeneinander befindliche Fettauffangschalen umfasst. Eine ähnliche Lösung ist in der US 4909137 A offenbart.

Ebenso können anstelle von Schalen auch Ablaufwinkel (DE 08804071 U) oder Rinnen (DE 2020099014563 U) Verwendung finden.

Bei einem weiteren Grill dieser Art ist eine Einrichtung zur Wärmeleitung vorgesehen, die Garvorgänge bei direkter und indirekter Wärmeführung ermöglicht. Beim direkten Grillen wird die Wärme der Wärmequelle bei offenem Deckel direkt auf das zu garende Grilliergut geleitet, während beim indirekten Grillen die Wärme von der Wärmequelle mittels einer Wärmeleiteinrichtung seitlich um das Grilliergut geführt wird und erst durch Umlenkung unter dem geschlossenen Deckel auf das Grilliergut gelangt. Zum Wechsel zwischen direkter und indirekter Wärmeführung weist der Grillkörper einen Einsatz mit verschliessbaren Öffnungen auf. Mittels eines aussen am Grillkörper geführten Handgriffs, der mit dem Einsatz verbunden ist, kann die Offen- und Schliessstellung der Öffnungen erreicht werden. In der DE 202014004089 U wird zudem eine Brennerabdeckung aus V-förmig abgewinkelten Elementen für eine homogene Wärmeverteilung vorgeschlagen, die den gesamten Brennerraum überdeckt.

In der US 2002/195096 A1 ist ein Grill mit verschiedenen Grilloptionen offenbart. Dieser Grill umfasst eine Brennkammer mit einem Brenner, wobei die Brennkammer mit einer klappbaren Haube versehen ist. Der Grill ist weiterhin mit einem Grillrost und einem Bratrost versehen. Unterhalb des Grillrosts ist eine Brennerabdeckung als Diffusor vorgesehen, was eine indirekte Erwärmung des Grillguts ermöglicht. Die Brennerabdeckung erstreckt sich zwischen Rückwand und Frontseite der Brennkammer und liegt an deren inneren Rändern auf.

Bekannt sind ebenfalls Grills mit einem Leitblech zwischen Brenner und Grillrost, welches in Richtung einer Hauptachse der Brennkammer in beliebiger Breite ausgeführt sein kann und dabei zumindest einen Brenner abdeckt, wobei es sich zwischen Frontseite und Rückwand der Brennkammer erstreckt und Bereiche mit ansteigender Neigung und einen gerundeten Bereich aufweist.

Der Erfindung liegt nun die Aufgabe zugrunde, einen Grill zum Grillen, Garen oder Backen von Speisen wie Fleisch oder Fisch auf einem Grillrost oder dergleichen, insbesondere zur Verwendung im Freien zu schaffen, der mit einem einfach handhabbaren und Flammschutz für ein, insbesondere kurzzeitiges, anbraten mit hoher Temperatur versehen ist.

Die Aufgabe ist mit den Merkmalen des Patentanspruchs 1 gelöst.

Erfindungsgemäss weist ein Grill, der insbesondere zur Verwendung im Freien geeignet ist, eine Brennkammer auf, in der mindestens ein Brenner vorgesehen ist. Er kann weiterhin als Grillfläche einen Grillrost umfassen, der auf bzw. oberhalb der Brennkammer gelegen ist.

Auf der, vom Brenner abgewandten offenen Fläche der Brennkammer ist als Grillfläche bevorzugt anstelle des Grillrosts erfindungsgemäss eine hoch wärmebeständige Platte und/oder eine Platte welche Infrarotstrahlung durchlässt anordenbar.

Der erfindungsgemässe Grill ist zum Grillen, Garen oder Backen von Speisen wie Fleisch, Fisch, Milchprodukten, Gemüse oder Backwaren, insbesondere zur Verwendung im Freien geeignet.

Die erfindungsgemässe Platte ist einfach reinigbar und spülmaschinenfest und ermöglicht eine Geschmacksverstärkung des Grillguts.

Aufgrund der Infrarotdurchlässigkeit erreicht Grillgut den sogenannten Umami Geschmack.

Bevorzugte Ausführungsformen sind in den abhängigen Ansprüchen offenbart. Vorteilhaft ist die Platte in Form einer Glasplatte, Keramikplatte oder einer Metallplatte ausgebildet, bevorzugt mit einer glatten Unterseite und einer, zum Beispiel, gewellten Oberseite zur Auflage des Grillgutes.

Der Grillrost kann zum Beispiel in einer Randvertiefung der Brennkammer oder auf der Brennkammer aufliegend anordenbar resp. befestigbar sein.

Bevorzugt ist die Platte zum Beispiel auf der Brennkammer oder dem Grillrost befestigbar, um Verlagerungen des Grillgutes oder mögliche Verletzungen der benutzenden Person zu vermeiden. Zur Befestigung der Platte können zum Beispiel Silikonhalter oder -auflagen, ein Metallrahmen, Metallgestelle, Federn anordenbar sein.

Bevorzugt ist der mindestens eine Brenner ein Keramikbrenner, ein Elektrobrenner oder auch ein Gasbrenner.

Die Erfindung wird nachfolgend in einem Ausführungsbeispiel in Form eines Gasgrills anhand einer Zeichnung näher beschrieben. In der Zeichnung zeigen die
- Fig. 1:: einen erfindungsgemässen Grill in Teilansicht;
- Fig. 2:: einen erfindungsgemässen Grill im Teilschnitt in einer zweiten Ausführungsform;
- Fig. 3:: eine Befestigung einer Platte in einer ersten Ausführungsform, in zwei Ansichten;
- Fig. 4:: eine Befestigung einer Platte in einer zweiten Ausführungsform, in zwei Ansichten;
- Fig. 5:: ein Metallgestell zur Aufnahme der efindungsgemässen Platte und
- Fig. 6:: das Metallgestell nach Fig. 5 in Anwendung.

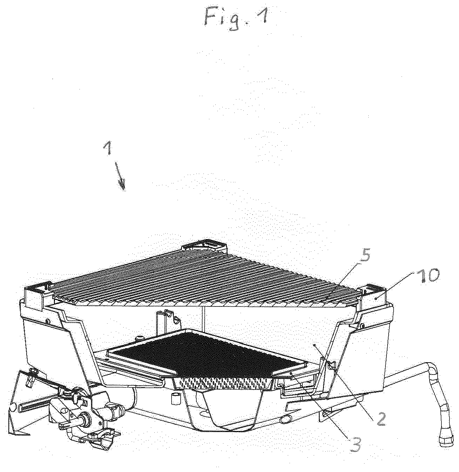

Ein erfindungsgemässer Grill 1 (Fig. 1) weist eine Brennkammer 2 auf, in der ein Brenner 3, im Beispiel ein Keramikbrenner vorgesehen ist, wobei die Brennkammer 2 mit einer klappbaren Haube versehen ist, die im geschlossenen Zustand die Brennkammer 2 abdeckt.

Ein, nicht dargestellter Grillrost kann auf der Brennkammer 2 aufliegen oder lagestabil in einer Randvertiefung der Brennkammer 2 anordenbar sein.

Die Haube kann zum Beispiel mittels eines Scharniers an der Rückwand der Brennkammer 2 oder an, den Grillrost 6 dreiseitig umgebenden Seitenwänden angeschlagen sein. Für das Auf- und Zuklappen ist die Haube mit einem Handgriff versehen.

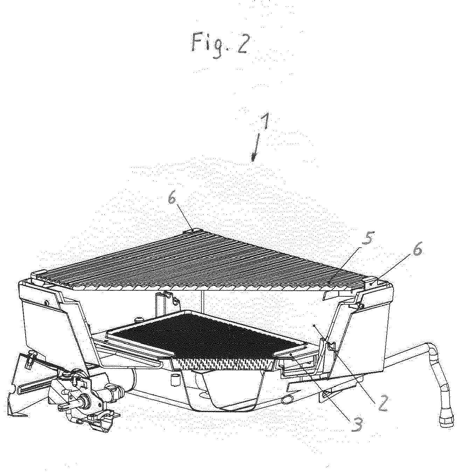

Oberhalb und im Beispiel anstelle des Grillrosts ist noch eine Glasplatte 5 als Grillfläche (Flammschutz) positioniert, die dazu dient, das Grillgut auf ihr abzulegen (Fig. 1 und 2).

Die Glasplatte 5 kann auch, aufgrund der Infrarotdurchlässigkeit, eine Alternative zu einem Metall Heat Diffusor sein.

Zudem kann die Gefahr resp. die Auswirkungen von Fettflammenbrand o. a. weitgehend reduziert werden.

Die Glasplatte 5 kann im Beispiel mit einer glatten Unterseite 7 und mit einer gewellten Oberseite 8 versehen sein (Fig. 1 und 2). Auf der gewellten Oberseite 8 oder ggf. umgekehrt auf der glatten Unterseite 7 wird das Grillgut abgelegt.

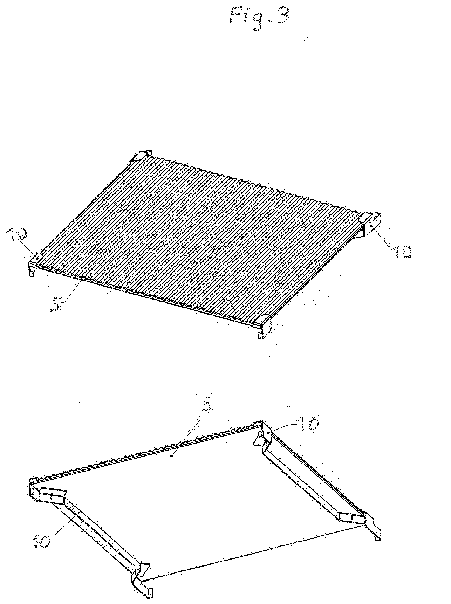

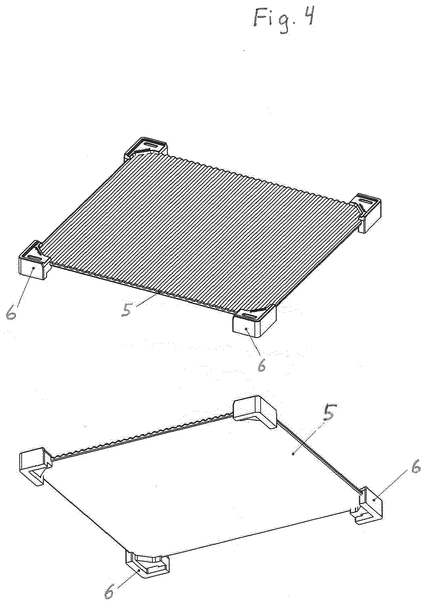

Die Glasplatte 5 ist mittels eines Metallrahmens 10, der auf der Brennkammer 2 angeordnet (Fig. 3). Die Befestigung der Glasplatte 5 kann zum Beispiel auch mittels Silikonecken 6 (Fig. 4) erfolgen.

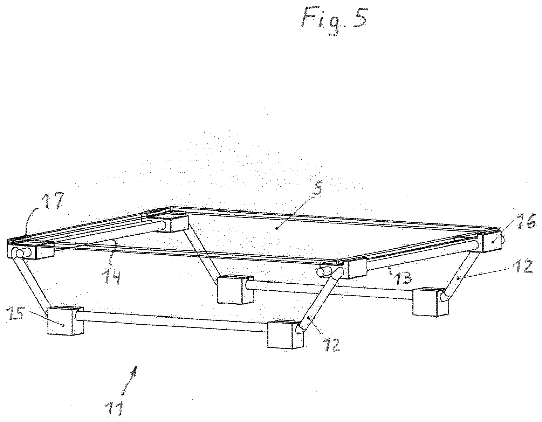

In einer weiteren Ausführungsform der Erfindung ist zur Aufnahme der Platte ein Gestell 11 (Fig. 5) vorgesehen. Es umfasst zwei parallel angeordnete Längsstreben 12, deren Enden gebogen sind, wobei die Enden der gebogenen Teile mit Querstreben 13 verbunden sind. An den Querstreben 13 sind im Beispiel weitere Haltestreben 14 angeordnet, die mittels Verbindungselementen 16 mit den Querstreben 13 verbunden sind.

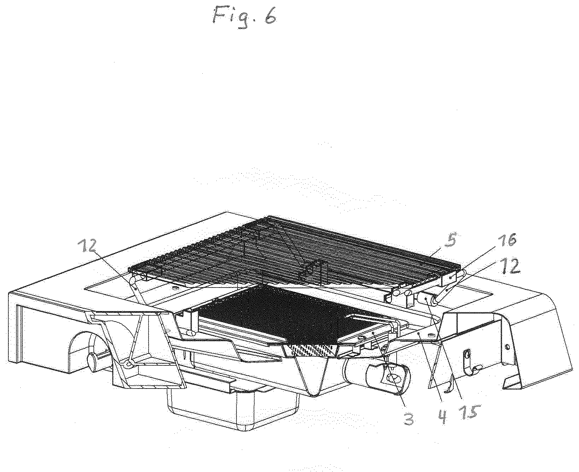

Das Gestell 11 ist variabel für unterschiedliche, marktübliche Keramikbrenner und Gehäuse einstellbar. Fig. 6 zeigt das Metallgestell 11 in Anwendung im Grill.

An den geraden Bereichen der Längsstreben 12 sind Auflageelemente 15 zur Auflage auf dem Grill 1 resp. der Brennkammer 2 vorgesehen.

Die Verbindungselemente 16 sind zudem mit Positioniernasen 17 zur Lagefixierung der Glasplatte 5 vorgesehen.

Die Streben 12-14 können zum Beispiel aus Edelstahldraht oder Aluminiumrohr gebildet sein.

Glasplatte 5, Grillrost und Metallrahmen 10, Metallgestell 11 und die Silikonecken 6 können einzeln gereinigt werden, auch in der Spülmaschine.

Mittels der Glasplatte 5 ist es möglich, Grillgut, insbesondere Fleisch, kurz (zum Beispiel bis 10 Sekunden) und scharf (bis zu ca. 800°C) anzubraten, um schnell eine Kruste auszubilden.

Der Vorteil der Platte bzw. Glasplatte 5 besteht darin, dass auf dieser mit normaler und hoher Temperatur gegrillt werden kann. Übliche Keramikbrenner ohne Diffusor und ohne Glasplatte 5 können nur für die Anbringung einer Kruste auf Fleisch verwendet werden, ansonsten verbrennt es und innen bleibt es roh.

Mit der Glasplatte 5 kann ein Keramikbrenner/Infrarotbrenner auch zum normalen Grillen genutzt werden, da dann ein Diffusor, wie er in EP 3442384 B1 offenbart ist, über den Infrarotbrenner gesetzt wird und darüber ggf. noch der Grillrost. Die Glasplatte 5 kann auch direkt über den Infrarotbrenner gesetzt werden. Das Glas lässt zudem die Infrarotstrahlung durch und ist im Vergleich zu einem Rost in wenigen Minuten einsatzbereit und heiss.

Bekannt ist neben dem Unterhitzegrill (Keramikbrenner von unten) der sogenannte Beefer, bei dem der Keramikbrenner oben angeordnet ist und somit mittels Infrarotstrahlung dem Fleisch eine Kruste verpasst. Der Vorteil von Beefern ist, dass es nicht zu einem Fettflammbrand kommt, der Nachteil besteht wie beim Keramikbrenner von unten darin, dass er nur zum kurz angrillen verwendet werden kann. Das Grillgut fertig zu grillen, ist nahezu ausgeschlossen.

Mittels der Glasplatte 5 kann der Beefer "umgedreht" werden, er lässt Infrarotstrahlung durch und kann sogar fertiggaren. Es kommt zu keinerlei Fettflammenbrand und man erhält eine perfekte Kruste und Geschmack (Umami).

Die Brennkammer 2 ist auf einem, ggf. rollfähigen Untergestell aufsitzend angeordnet und kann über seitliche, nicht dargestellte Ablagen für Geschirr oder Grillgut verfügen.

Anstelle einer Brenneranordnung könnten auch Elektroheizstäbe als Wärmequelle eingesetzt werden, bei entsprechender konstruktiver Anpassung auch Holzkohle, Brikettes, Pellets oder andere brennbare, organische Stoffe.

### Liste der Bezugszeichen

- 1: Grill
- 2: Brennkammer
- 3: Brenner
- 4: Brennkammerwand
- 5: Glasplatte
- 6: Silikonecke
- 7: Unterseite
- 8: Oberseite
- 10: Metallrahmen
- 11: Gestell
- 12: Strebe
- 13: Strebe
- 14: Haltestrebe
- 15: Auflageelement
- 16: Verbindungselement
- 17: Positioniernase

## Patentansprüche

1. Grill zum Grillen, Garen oder Backen von Speisen auf einer Grillfläche, insbesondere zur Verwendung im Freien, der eine Brennkammer (2) umfasst, in der mindestens ein Brenner (3) vorgesehen ist, **dadurch gekennzeichnet, dass** auf der, vom Brenner (3) abgewandten offenen Fläche der Brennkammer (2) anstelle eines Grillrosts eine hoch wärmebeständige und/oder infrarotdurchlässige Platte anordenbar ist.

2. Grill nach Anspruch 1, **dadurch gekennzeichnet, dass** die Platte eine Glasplatte (5) oder eine Metallplatte ist, bevorzugt mit einer glatten Unterseite (7) und einer gewellten Oberseite (8).

3. Grill nach Anspruch 1 oder 2, **dadurch gekennzeichnet, dass** zwischen der Platte und dem Brenner (3) noch ein Grillrost angeordnet ist.

4. Grill nach einem der Ansprüche 1 bis 3, **dadurch gekennzeichnet, dass** die Platte auf dem Grillrost oder auf der Brennkammer (2) befestigbar ist.

5. Grill nach Anspruch 4, **dadurch gekennzeichnet, dass** zur Anordnung oder Befestigung der Platte auf dem Grillrost oder der Brennkammer (2) Silikonecken (6), ein Metallrahmen (10), ein Gestell (11) oder Federn auf dem Grillrost anordenbar sind.

6. Grill nach einem der Ansprüche 1 bis 5, **dadurch gekennzeichnet, dass** der mindestens eine Brenner (3) ein Keramikbrenner oder Elektrobrenner ist.

7. Grill nach einem der Ansprüche 3 bis 6, **dadurch gekennzeichnet, dass** der Grillrost in bzw. auf einer Randvertiefung (9) der Brennkammer (2) anordenbar ist.

8. Grill nach einem der Ansprüche 3 bis 6, **dadurch gekennzeichnet, dass** zur Anordnung oder Befestigung der Platte auf dem Grillrost oder der Brennkammer (2) ein Gestell (11) vorgesehen ist.
